# EUROPÄISCHE PATENTSCHRIFT

(11) **EP 1 145 619 B1**
(45) Veröffentlichungstag und Bekanntmachung des Hinweises auf die Patenterteilung: **03.11.2004**
(21) Anmeldenummer: 01107219.6
(22) Anmeldetag: 23.03.2001
(51) Int. Cl.: A01D 75/28

(54) **Landwirtschaftliche Erntemaschine mit Seitengang**
Harvesting machine for hillside working
Machine de récolte pour travail sur pente

(30) Priorität: 12.04.2000 DE 10018211
(43) Veröffentlichungstag der Anmeldung: 17.10.2001
(73) Patentinhaber: CLAAS Selbstfahrende Erntemaschinen GmbH, 33428 Harsewinkel (DE)
(72) Erfinder: Uhlending, Hubert, 48249 Dülmen (DE); Thiemann, Holger, 33615 Bielefeld (DE)

(56) Entgegenhaltungen:
- EP-A- 0 234 585
- EP-A- 0 887 009
- DE-A- 4 105 260
- DE-U- 29 519 842
- FR-A- 2 172 117
- US-A- 2 753 675
- US-A- 2 780 903
- US-A- 2 871 646
- US-A- 5 415 586

## Beschreibung

Die Erfindung bezieht sich auf eine landwirtschaftliche Erntemaschine mit einem Maschinengehäuse und mit einer angetriebenen Hauptfahrachse, auf deren Enden Antriebsräder unter Zwischenschaltung von Radgetrieben oder direkt schwenkbar aufgesetzt sind und mit Verstelleinrichtungen die das Maschinengehäuse auf unebenem Gelände gegenüber der Fahrebene bzw. den Laufrädern horizontal ausrichten sowie mit einem frontseitigen Vorsatzgerät, welches mittels einer regelbaren Schwenkeinrichtung mit dem Maschinengehäuse derart gekoppelt ist, dass das Vorsatzgerät um eine quer zur Fahrachse verlaufende Drehachse bewegbar ist. Die Drehachse kann fiktiver Art (DE 4105260 A1)oder in Form einer Bolzenverbindung (EP 0243540 B1) ausgeführt sein.

Die landwirtschaftliche Erntemaschine ist in bevorzugter Ausführung ein Mähdrescher. In dem Maschinengehäuse-ist im Anschluss an das Vorsatzgerät ein das Erntegut einziehender Schrägförderer angeordnet, um das Erntegut zu einer Bearbeitungseinrichtung, im dargestellten Beispiel einer Drescheinrichtung zu fordern. Der Drescheinrichtung sind Abscheideeinrichtungen und eine Siebeinrichtung nachgeschaltet. Das Vorsatzgerät ist bei einem Mähdrescher der Mähtisch, der mit einem Mähbalken und das Erntegut zur Mitte hin fördernden Schneckenförderer ausgerüstet ist. Derartige landwirtschaftliche Erntemaschinen sind mit einem sogenannten Hangausgleich ausgestattet, damit sichergestellt ist, dass die im Maschinengehäuse angeordneten Aggregate zur Erhaltung ihrer Funktionstüchtigkeit auch beim Arbeiten am Hang in waagerechter Stellung verbleiben.

Als Hangausgleich sind verschiedene Systeme bekannt. Besonders bewährt hat sich eine Fahrachse, die mit dem Maschinengehäuse starr verbunden ist und an deren Enden unter Zwischenschaltung von Radgetrieben die Laufräder schwenkbar angeordnet sind. (DBP 4131433) Die Laufräder sind so unabhängig voneinander in ihrer Höhenlage einstellbar, wodurch das Maschinenghäuse bei Arbeiten am Hang immer eine waagerechte Stellung einnimmt. Die Verstellung der Radsätze erfolgt beim Ernten am Hang selbsttätig, hierzu ist das Machinengehäuse mit mindestens einem Pendelschalter oder einem Neigungssensor ausgerüstet. Die Signale werden dann zur Regelung der Rädereinstellung nach entsprechender Umsetzung benutzt. In der US-PS 2904341 ist so eine Achse als Pendelachse ausgebildet, die für den gleichen Zweck gegenüber dem Maschinengehäuse hydraulisch einstellbar abgestützt ist.

Bei einer Verstellung der Laufräder für Arbeiten am Hang ergibt sich zwangsläufig, dass das Maschinengehäuse und das mit ihm verwindungssteif verbundene Gehäuse des Schrägförderers waagerecht gehalten werden, im Gegensatz zu dem Erntevorsatzgerät welches mit seiner Arbeitsfront, zum Beispiel einem Mähbalken- möglichst gleichmäßig; parallel- zum Boden geführt sein sollte, um eine optimale Aufnahme des Erntegutes zu erreichen. Es ist demzufolge notwendig; dass das Vorsatzgerät, beispielsweise bei einem Mähdrescher der Mähtisch, gegenüber dem Maschinengehäuse bzw. dem Gehäuse des Schrägförderers so verschwenkt werden kann, dass das Vorsatzgerät parallel oder annähernd parallel zum Gelände steht. Die Koppelung erfolgt deshalb über eine regelbare Schwenkeinrichtung, so dass beim Ernten am Hang stets sichergestellt ist, dass sich die Aggregate innerhalb des Maschinengehäuses in einer horizontalen Stellung befinden, während das Vorsatzgerät parallel oder annähernd parallel zum Boden geführt wird. Da sich beim Ernten das Gelände ändert, ist zur Erleichterung für den Fahrer eine selbsttätige Regelung bzw. Einstellung des Vorsatzgerätes gegeben.

An der Einlaufseite weist das Maschinengehäuse, beziehungsweise der Schrägförderer eine viereckige Öffnung auf. Bei Arbeiten auf ebenem Gelände ist dieser Öffnung nahezu deckungsgleich die Förderöffnung im Wandungsteil des Vorsatzgerätes vorgeordnet. Bei Arbeiten am Hang verschieben sich die gegenüberstehenden Öffnungen zueinander, so daß die Durchlassweiten der Öffnungen insbesondere im Bereich ihrer Seitenbegrenzungen erheblich eingeschränkt werden. Der Verstellwinkel des Vorsatzgerätes ist demzufolge begrenzt, da ein Stau des Erntegutes vor dem Schrägförderer unbedingt vermieden werden muss. Ab einem gewissen Neigungswinkel ergibt sich deshalb, dass das Vorsatzgerät nicht mehr parallel oder annähernd parallel zum Gelände steht, so dass beim Ernten von Lagergetreide es dazu führen kann, dass der Mähbalken nicht mehr unter die Halme geführt werden kann.

Der Erfindung liegt die Aufgabe zugrunde, eine landwirtschaftliche Erntemaschine der eingangs näher beschriebenen Art in konstruktiv einfacher Weise so zu gestalten, dass der Verstellbereich beziehungsweise der Schwenkwinkel des Vorsatzgerätes gegenüber dem Maschinengehäuse wesentlich vergrößert wird, wobei gewährleistet sein soll, dass der störungsfreie Fluss des Erntegutes voll erhalten bleibt.

Die gestellte Aufgabe wird gelöst, indem die regelbare Schwenkeinrichtung einen Schwenkrahmen umfasst, der einerseits mit dem Schrägförderer um eine horizontrale Achse drehbar, verbunden ist und der andererseits Mittel zur dreh- bzw. schwenkbaren Verbindung eines Vorsatzgerätes mit dem Schwenkrahmen aufweist, wodurch das Vorsatzgerät ebenfalls separat um eine horizontrale Achse drehbar ist.

Die Verschwenkung des Vorsatzgerätes gegenüber dem Maschinengehäuse bzw. des Schrägförderers erfolgt dabei auf zwei etwa vertikal, getrennt voneinander verlaufenden Schwenkebenen, wobei zwischen den Schwenkebenen ein Schwenkrahmen als Koppelglied zwischen dem Schrägförderer und dem Vorsatzgerät angeordnet ist und der Schwenkrahmen einerseits mit dem Schrägförderer und andererseits mit dem Vorsatzgerät drehbeweglich verbunden ist

Der Begriff -Schwenkeinrichtung- umfasst die gesamte Einrichtung für die Queranpassung des Vorsatzgerätes am Hang. Da diese Einrichtung die erforderliche Verstellung und die damit auftretende Verschränkung des Vorsatzgerätes zum Maschinengehäuse bzw. zum Schrägförderer innerhalb zweier Trenn- bzw. Schwenkebenen vollzieht entsteht eine gestufte Strecke innerhalb der Schwenkeinrichtung. Der maximal mögliche Verstellwinkel des Vorsatzgerätes summiert sich aus den Verstellmöglichkeiten in den beiden Schwenkebenen beidseitig bzw. vor und hinter dem Schwenkrahmen. Durch die Aufteilung des größtmöglichen Verschwenkweges des Vorsatzgerätes auf zwei beabstandete Schwenkebenen sind die Stufensprünge bzw. die Höhenunterschiede zwischen den Bauelementen Vorsatzgerät, Schwenkrahmen und Schrägförderer nur so groß, dass der kontinuierliche Fluss des zu fördernden Emtegutes erhalten bleibt.

Damit, bezogen auf die mittige Längsachse der Erntemaschine, das Vorsatzgerät an der einen Seite um den gleichen Betrag abgesenkt wird, wie es an der anderen Seite angehoben wird, ist vorgesehen, dass die gemeinsame Schwenkachse innerhalb und möglichst nahe des Zentrums der Einlauföffnung des Maschinengehäuses bzw. des Gehäuses für den Schrägförderer liegt. Durch die konstruktiv äußerst einfache Lösung ist gegeben, dass das Vorsatzgerät einschließlich des Schwenkrahmens und das Vorsatzgerät allein, unabhängig voneinander durch hydraulische Zylindereinheiten eingestellt werden können. Bei einer extremen Hanglage können dann die schwenkbaren Einheiten nacheinander verstellt werden. Außerdem ist die Ansteuerung von Kolbenzylindereinheiten durch entsprechende Steuerungselemente besonders einfach.

Fährt die landwirtschaftliche Erntemaschine in eine Hanglage, muss zunächst sichergestellt sein, dass rechtzeitig eine Einstellung der Höhenlage der Laufräder erfolgt. Dieses geschieht zweckmäßigerweise, der Hangneigung entsprechend, durch am Maschinengehäuse angeordnete Neigungssensoren, durch die entsprechende Steuerventile betätigt werden, die den hydraulischen Verstellzylindern für die Rädereinstellung funktionstechnisch zuordnet sind.

Die Ansteuerung der hydraulischen Stellelemente zum Betätigen des Schwenkrahmens wird zweckmäßigerweise über wenigstens einen die Schrägstellung der Antriebsachse gegenüber dem Maschinengehäuse ermittelnden Sensor, vorzugsweise durch einen hydraulischen Geberzylinder ausgelöst. Der hydraulische Geberzylinder bietet den Vorteil, dass die vorhandene Hydraulikanlage genutzt werden kann.

Das Vorsatzgerät ist gegenüber dem Schwenkrahmen zusätzlich quer zur Maschinenlächsachse in seiner Lage zum Boden einstellbar. Hierdurch erreicht man letztendlich eine Feineinstellung, z.Bsp. des Mähbalkens zurAckerbodenfläche. Der Schwenkrahmen ist hierfür mit mindestens zwei, mit Abstand zueinander angeordneten Kolbenzylindereinheiten bestückt, deren Kolbenstangen an ihren freien Enden als Teile von lösbaren Kupplungen ausgebildet sind, die für die Aufnahme des Vorsatzgerätes dienen (DBP 3522699). Die optimale Einstellung des Vorsatzgerätes wird nach bekannter Art von mindestens zwei unterhalb des Vorsatzgerätes angeordneten Tastbügeln bestimmt, die den Abstand zum Ackerboden hin sensorisch kontrollieren und eine Einstellung der Kolbenzylindereinheiten entsprechend auslösen. Auf diese Weise wird der Mähtisch bereits bei geringfügigen Veränderungen der Lageverhältnisse des Vorsatzgerätes zum Ackerboden hin hydraulisch nachgeregelt bzw. eingestell, wobei die sonstigen Einrichtungen zur Regelung der Querneigung unberührt bleiben.

Der das Vorsatzgerät mit dem Schrägförderer verbindende Schwenkrahmen ist an seinem Umfang mit an sich bekannten (DE 4105260 A1) Koppel- und Führungsmittel ausgestattet, die eine Schwenkbewegung zwischen den Bauelementen ermöglichen und eine betriebssichere Verbindung zu dem Schrägförderergehäuse herstellen. Zu diesem Zweck sind an dem Schwenkrahmen Führungsrollen frei drehbar gelagert, die sich an Führungsflächen des angrenzenden Schrägförderers abstützen. Dazu sind die sich gegenüberstehenden Elemente mit entsprechend gestalteten Stegen ausgestattet. Diese Stege liegen vorzugsweise in den Eckbereichen des Schwenkrahmens beziehungsweise der Schrägfördererfront.

Eine landwirtschaftliche Erntemaschine wird auch in einem solchen Gelände eingesetzt, welches nicht nur geneigt ist, sondern welches zusätzlich auch, in Fahrtrichtung gesehen, ansteigt oder abfällt. Damit beim Ernten von Lagergetreide oder bei starken Spurtiefen bei einem lockeren Boden der Arbeitswinkel des Vorsatzgerätes, beispielsweise der Schnittwinkel des Mähbalkens optimal eingestellt werden kann, ist in weiterer Ausgestaltung vorgesehen, dass der regelbaren Schwenkeinrichtung eine Kippeinrichtung funktionell zugeordnet ist, deren Drehachse quer zur Drehachse der Schwenkeinrichtung verläuft. Diese Kippeinrichtung ist in bevorzugter Ausführung ein Kipprahmen, dessen Kippachse im unteren Bereich an der Einlaufseite des den Schrägförderer umgebenden Maschinengehäuses liegt. Dadurch kann das Vorsatzgerät nicht nur um eine quer zur Antriebsachse verlaufende Schwenkachse verdreht werden, sondern auch um eine parallel und im Abstand zu dieser Antriebsachse verlaufende Drehachse gekippt werden. Zum Kippen des Vorsatzgerätes ist an die Kippeinrichtung ebenfalls ein sensorgesteuertes Stellelement, vorzugsweise in Form eines Hydraulikzylinders angeschlossen.

Anhand der beiliegenden Zeichnungen wird die Erfindung noch näher erläutert.

Es zeigen:
- Figur 1: den vorderen Bereich einer landwirtschaftlichen Erntemaschine in Form eines Mähdreschers in einer Seitenansicht,
- Figur 2: eine der Fig. 1 entsprechende Darstellung, bei der jedoch die Bauteile auseinander gezogen sind,
- Figur 3: die Schwenkeinrichtung in einer Stirnansicht, mit Blick auf die einlaufseitige Öffnung des Schwenkförderers, in der Grundstellung,
- Figur 4: eine Stirnansicht der Erntemaschine nach der Fig. 1,
- Figur 5: den vorderen Bereich eines Mähdreschers in einer Seitenansicht mit angehobenem Mähtisch und
- Figur 6: einen Schnitt längs der Linie VI-VI in der Fig. 3.

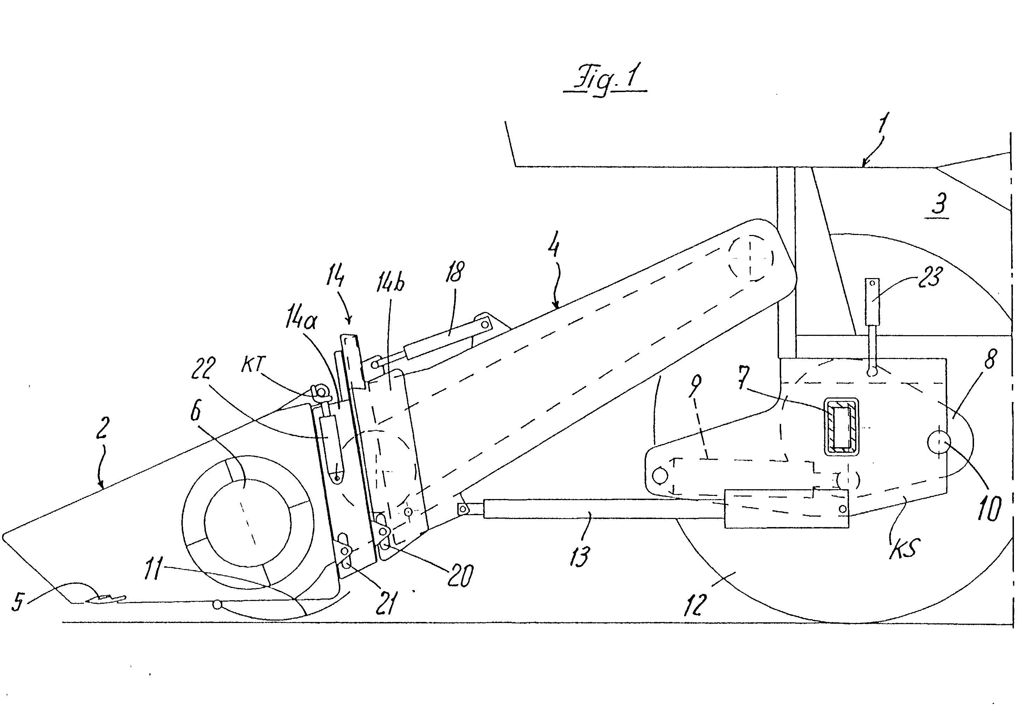

Der in den Fig. 1, 2 und 5 teilweise dargestellte Mähdrescher 1 ist mit einem Vorsatzgerät 2 ausgestattet, welches ein Mähtisch ist. Dieser ist an das nicht näher erläuterte Maschinengehäuse 3 in noch näher erläuterter Weise aufgehängt. Im vorderen Bereich ist das Maschinengehäuse 3 das Gehäuse eines Schrägförderers 4, der das Erntegut zum nicht dargestellten Dresahwerk forden. Das Vorsatzgerät 2 ist mit einem Mähbalken 5 und einem Querförderer 6 ausgestattet, um das abgeschnittene Erntegut vor die einlaufseitige Öffnung des Schrägförderers 4 zu transportieren Die Hauptfahrachse 7 des Mähdreschers 1 ist starr mit dem Machinengehäuse 3 verbunden. Die ihr zugeordneten Laufräder 12 werden für die Ernte am Hang, der Hangneigung entsprechend unterschiedlich in ihrer Laufhöhe eingestellt, so dass die im Maschinengehäuse 3 angeordneten Aggregate, beispielsweise das Dreschwerk und die Siebeinrichtung stets horizontal stehen um einsseitige Gutansammlungen im Gehäuse zu vermeiden.. Dazu ist der Mähdrescher mit zwei Radgetrieben 8 ausgestattet, welche über Konsolen KS mit den Enden der Hauptfahrachse 7 schwenkbar verbunden sind. An den Konsolen stützen sich Kolbenzylindereinheiten 9 ab, deren Kolbenstangen an die Radgetriebe 8 angreifen die ihrerseits um feste Achsen 10 in den Konsolen verschwenkbar sind. Die Verstellung der Laufräder 12 erfolgt selbsttätig. Hierfür ist der Mähdrescher 1 mit einer nicht näher erläuterten Regeleinrichtung ausgerüstet, die mit einem Neigungssensor QS am Maschinengehäuse 3 ausgestattet ist.

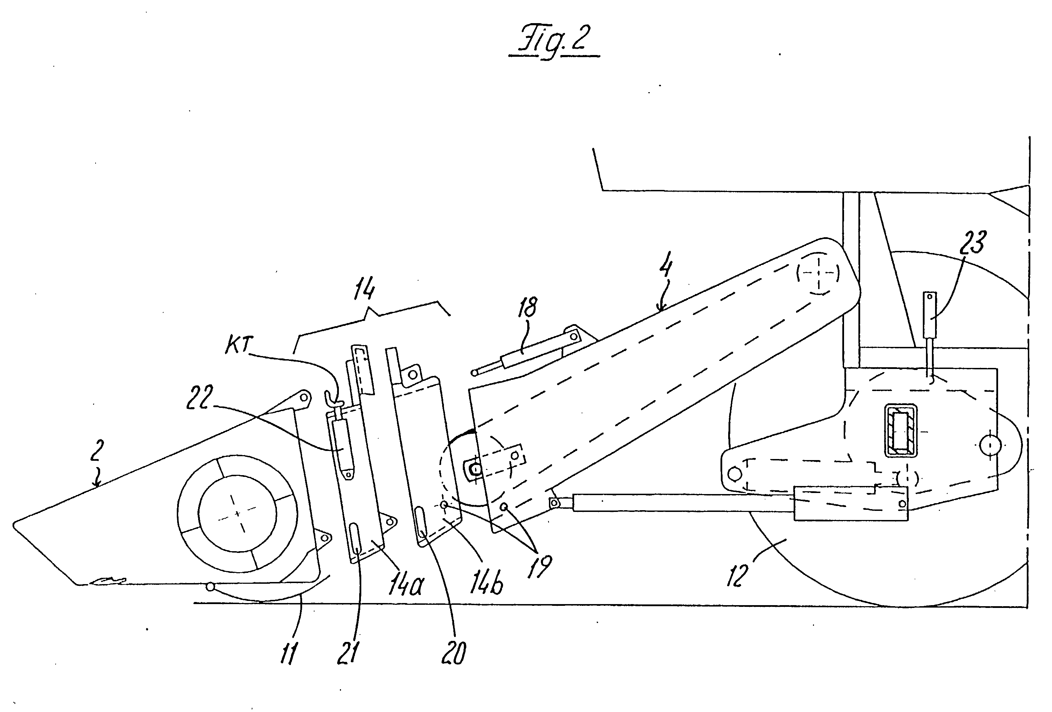

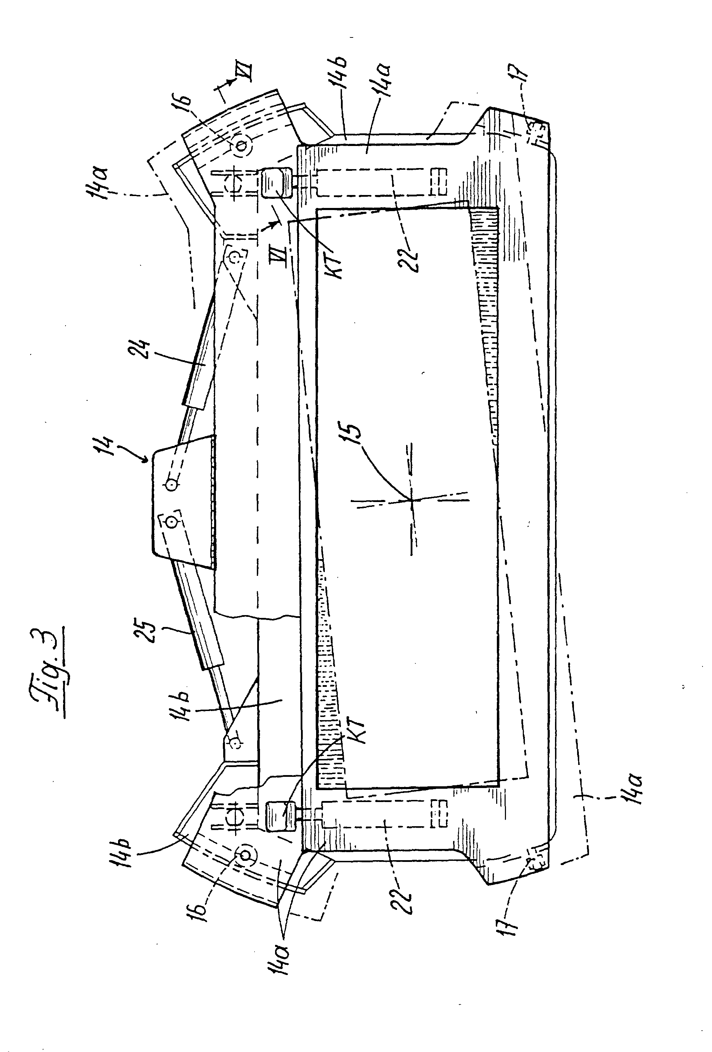

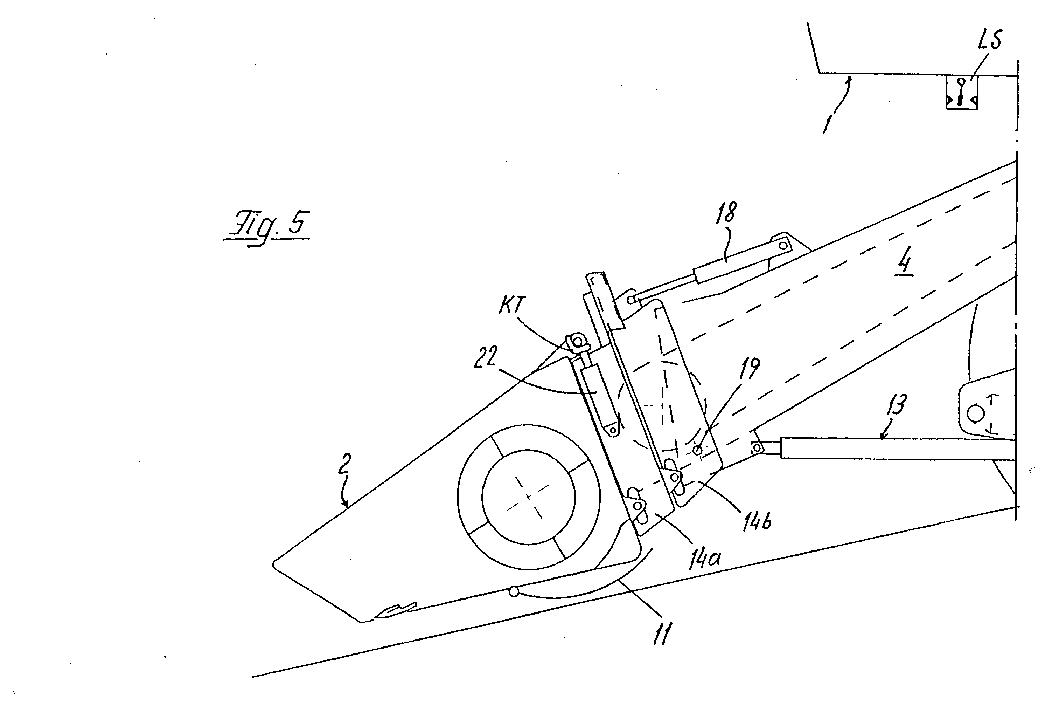

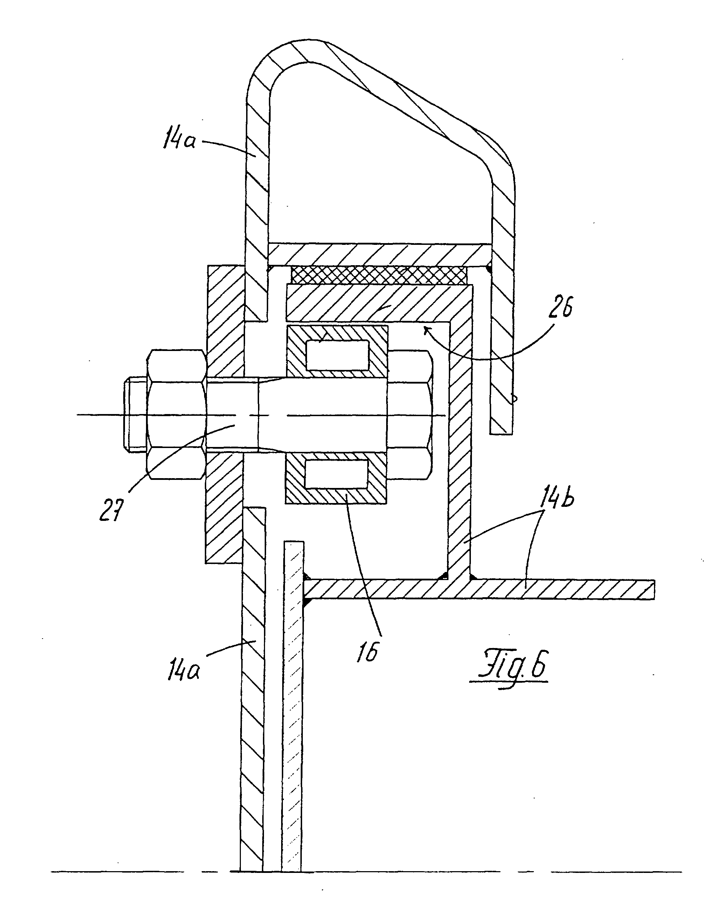

Sobald der Mähdrescher 1 in eine Schräglage fährt, werden die Kolbenzylindereinheiten 9 von dem Sensor QS angesteuert, um das Maschinengehäuse 3 durch Verschwenkung der Laufräder 12 in der waagerechten Ausgangslage zu halten. Das Vorsatzgerät 2 einschließlich des Gehäuses für den Schrägförderer 4 wird durch Kolbenzylindereinheiten 13 angehoben bzw. abgesenkt. Die Ankopplung des Vorsatzgerätes 2 an das Maschinengehäuse 3 bzw den Schrägförderers 4 erfolgt mittels einer regelbaren Schwenkeinrichtung 14, die mit Bezug auf Fig. 2 und 5 erläutert wird. Die Schwenkeinrichtung 14 besteht im dargestellten Ausführungsbeispiel aus dem Schwenkrahmen 14 a, wobei an dem Schwenkrahmen 14 a ein gegenüber dem Schwenkrahmen 14 a ebenfalls verschwenkbares Vorsatzgerät 2 aufgehängt ist. Der Schwenkahmen 14 a und das Vorsatzgerät 2 sind um eine Achse 15 gemeinsam oder getrennt drehbar,die in Längsrichtung des Mähdreschers 1 verläuft bzw. quer zur Hauptfahrachse 7 steht. Der Schwenkrahmen 14 a ist auch gegenüber einem Kipprahmen 14 b verschwenkbar. Die Verbindung der beiden Rahmen 14 a,und 14 b erfolgt durch in Kulissen geführte Führungsrollen 16, 17, wie anhand der Fig. 6 noch näher erläutert wird. Der Kipprahmen 14b ist mittels Kolbenzylindereinheiten 18 um eine untere Querachse 19 schwenkbar, um das Vorsatzgerät an Steigungen oder Gefälle in Maschinenlängsrichtung im Gelände anzupassen. Der Schwenkrahmen 14 a ist gegenüber dem Kipprahmen 14 b um die Achse 15 verschwenkbar. Im Kipprahmen 14 b sind Langlöcher 20 vorgesehen, in die mit dem Schwenkrahmen 14a verbundene Bolzen eingreifen, wodurch die Rahmen 14a und 14b unter Beibehaltung der Schwenkbarkeit zueinander verbunden werden und wodurch die Schwenk-Endstellungen des Rahmen 14a begrenzt wird. Die Verstellung des Schwenkrahmens 14 a erfolgt über zwei Kolbenzylindereinheiten 24, 25, die wie in der Fig. 3 dargestellt sich an dem Kipprahmen 14b abstützen. Der Schwenkrahmen 14 a ist ebenfalls für den gleichen Zweck im unteren Bereich mit Langlöchern 21 ausgestattet, in die Bolzen des Vorsatzgerätes 2 eingreifen. Die Verschwenkung des Vorsatzgerätes 2 gegenüber dem Schwenkrahmen 14a erfolgt über zwei weitere Kolbenzylindereinheiten 22, die seitlich am Schwenkrahmen 14 a angebracht sind und deren Kolbenstangen mit Kupplungsteilen KT ausgestattet sind, deren aufrechte Schenkel feste Bolzen des Vorsatzgerätes 2 hintergreifen.

Die Fig. 3 ist eine stirnseitige Betrachtung der Schwenkeinrichtung 14 bei abgekuppeltem Vorsatzgerät 2 entgegen die Fahrtrichtung der Erntemaschine. Es ist hier die Ausgangslage beziehungsweise Grundstellung dargestellt, wobei die Förderöffnungen des Schwenkrahmens 14a und des Kipprahmens 14b mit der Öffnung des Schrägförderers 4 sich deckend ausgerichtet sind. In diesem Fall stehen die Laufräder 12 auf gleicher Höhe und somit parallel und im Abstand zur zugeordneten horizontalen Fläche des Maschinengehäuses 3, so als würde der Mähdrescher im ebenen Gelände eingesetzt. Fährt er jedoch in eine Hanglage, werden die Laufräder 12 verstellt, wobei die Verstellsignale durch den Neigungssensor QS ausgelöst werden. Sensoren 23, beispielsweise in Form von hydraulischen Geberzylindern 23 registrieren diese Verstellung der Laufräder 12 und lösen gleichzeitig Signale zur Ansteuerung der Kolbenzylindereinheiten 24, 25 aus, um die Schwenkeinrichtung 14 zu betätigen, das heißt , den Schwenkrahmen 14a einschließlich das angekoppelte Vorsatzgerät 2 in Abhängigkeit von der Neigung des Geländes zu verstellen.

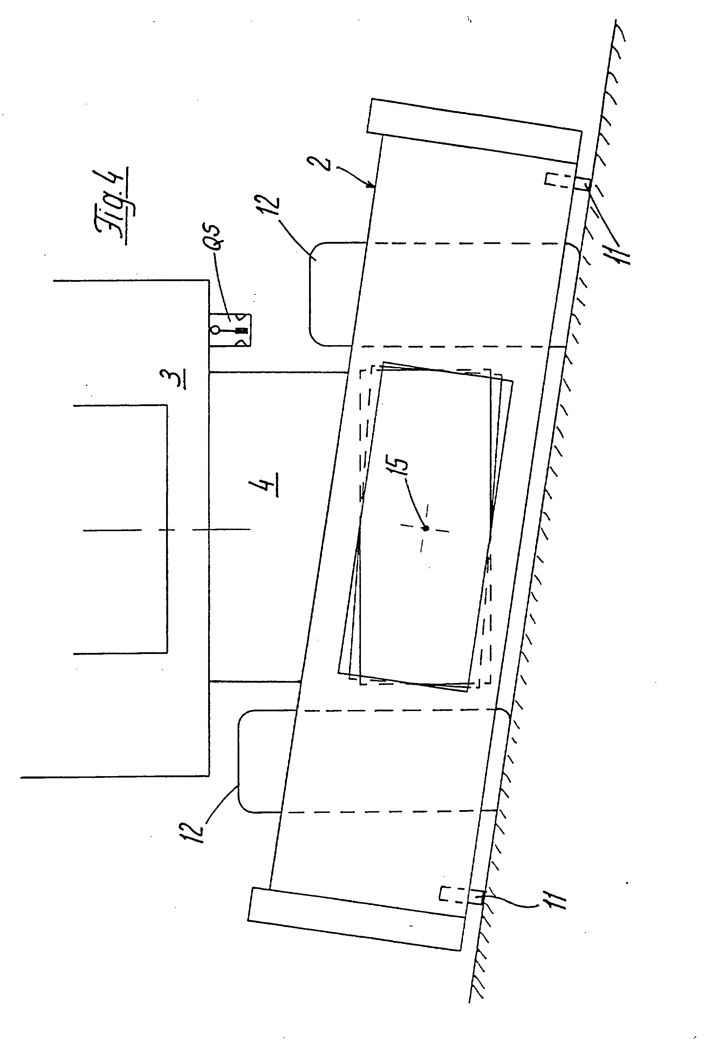

In der Figur 3 ist ferner mit strichpunktierten Linien eine Schwenklage angedeutet nach der der Schwenkrahmen 14a und somit auch das Vorsatzgerät 2 um die Achse 15 entgegen dem Uhrzeigersinn geschwenkt wurde. Bei einer entsprechenden Hanglage kann er jedoch auch entgegengesetzt um den gleichen Betrag im Uhrzeigersinn geschwenkt werden. Zur Verbindung des Schwenkrahmens 14a mit dem Kipprahmen 14b sind am Schwenkrahmen 14a, an der dem Kipprahmen 14b zugewandten Seite vier Führungs- und Halterollen 26 drehbar gelagert, die sich in bekannter Weise an kulissenartig gestalteten Führungsflächen 27 des Kipprahmens 14b abstützen (DE A1 4105260). Wird die Neigung des Geländes noch größer, werden die Kolbenzylindereinheiten 22 angesteuert, um das Vorsatzgerät 2 bzw. den Mähtisch gegenüber dem Schwenkrahmen 14a zu verschwenken. Die Schwenkbewegung wird durch die Langlöcher 21 im Schwenkrahmen 14 begrenzt. Die Fig. 4 zeigt diese größtmögliche Schrägstellung des Vorsatzgerätes 2 gegenüber dem Maschinengehäuse 3 sowie den maximalen Höhenversatz der Antriebsräder 12. Außerdem zeigt diese Figur, dass der Durchlaufbereich zwischen dem Vorsatzgerät 2 und dem Kipprahmen 14b mit Versatz in Machinenlängsrichtung dreifach gestuft ist, so dass ein Stau des Erntegutes vermieden wird.

Die Fig. 5 zeigt, dass mittels der Kolbenzylindereinheiten 13 das Vorsatzgerät 2 einschließlich des Schrägförderers 4 mit dem Gehäuse angehoben und abgesenkt werden kann, so dass die Taster 11 außer Bodenkontakt kommen. Ferner zeigt diese Figur, dass mittels der Kolbenzylindereinheiten 18 das Vorsatzgerät 2 der Schwenkrahmen 14 a und der Kipprahmen 14 b um die Querachse 19 kippbar sind.

Die Fig. 6 zeigt, dass am Schwenkrahmen 14a die Halte- und Führungsrollen 16 auf Bolzen 27 frei drehbar gelagert sind. Diese Führungsrollen 16 stützen sich an den Führungsflächen 26 ab. Diese Verbindung erfolgt nach Art einer Kulisse. Dazu ist der Schwenkrahmen 14a im Bereich der Führungsrollen 27 U-förmig gestaltet, so dass er Stege des Kipprahmens 14b übergreift, so dass sie zwar schwenkbar, ansonsten jedoch in Längsrichtung unverschiebbar miteinander verbunden sind.

Die Erfindung ist auf das dargestellte Ausführungsbeispiel nicht beschränkt. Wesentlich ist, dass die regelbare Schwenkeinrichtung mit mindestens einem zusätzlich verschwenkbaren Schwenkelement 14a ausgestattet ist, so dass das Vorsatzgerät 2 gegenüber dem Maschinengehäuse 3 auf mindestens zwei verschiedenen Ebenen in mehreren Stufen verschwenkbar ist.

### Bezugszeichenliste

- 1 -: Mähdrescher
- 2 -: Vorsatzgerät
- 3 -: Maschinengehäuse
- 4 -: Schrägförderer
- 5 -: Mähbalken
- 6 -: Querförderer
- 7 -: Hauptfahrachse
- 8-: Radgetriebe
- 9 -: rolbenzylindereinheit
- 10 -: feste Achse
- 11 -: Taster
- 12 -: Laufräder
- 13 -: Kolbenzylindereinheit
- 14 -: Schwenkeinrichtung
- 14a -: Schwenkrahmen
- 14b -: Kipprahmen
- 15 -: gemeinsame Achse
- 16 -: Führungsrolle
- 17 -: Führungsrolle
- 18 -: Kolbenzylindereinheit
- 19 -: Querachse
- 20 -: Langloch
- 21 -: Langloch
- 22 -: Kolbenzylindereinheit
- 23 -: Sensor
- 24 -: Kolbenzylindereinheit
- 25 -: Kolbenzylindereinheit
- 26 -: Führungsfläche
- 27 -: Bolzen
- QS: Quersensor
- LS: Längssensor
- KT: Kuppelteil

## Patentansprüche

1. Landwirtschaftliche Erntemaschine mit einem Maschinengehäuse (3) und mit einer angetriebenen Hauptfahrachse (7), auf deren Enden Antriebsräder (12) unter Zwischenschaltung von Radgetrieben (8) oder direkt schwenkbar aufgesetzt sind und mit Verstelleinrichtungen die das Maschinengehäuse (3) auf unebenem Gelände gegenüber der Fahrebene bzw. den Laufrädern (12) horizontal ausrichten sowie mit einem frontseitigen Vorsatzgerät (2), welches mittels einer regelbaren Schwenkeinrichtung(14) mit dem Maschinenghäuse (3) derart gekoppelt ist, dass wenigstens das Vorsatzgerät (2) um eine quer zur Hauptfahrachse (7) verlaufende Drehachse (15) bewegbar ist, **dadurch gekennzeichnet, dass** die regelbare Schwenkeinrichtung (14) einen Schwenkrahmen (14a) umfasst, der einerseits mit dem Schrägförderer (4) um eine in etwa horizontrale Achse (15) drehbar, verbunden ist und der andererseits Mittel zur dreh- bzw. schwenkbaren Verbindung eines Vorsatzgerätes (2) mit dem Schwenkrahmen (14a) aufweist, wodurch das Vorsatzgerät (2) ebenfalls um eine in etwa horizontrale Achse (15) drehbar ist.

2. Landwirtschaftliche Erntemaschine mit einem Maschinengehäuse (3) und mit einer angetriebenen Hauptfahrachse (7), auf deren Enden Antriebsräder (12) unter Zwischenschaltung von Radgetrieben (8) oder direkt schwenkbar aufgesetzt sind und mit Verstelleinrichtungen die das Maschinengehäuse (3) auf unebenem Gelände gegenüber der Fahrebene bzw. den Laufrädern (12) horizontal ausrichten sowie mit einem frontseitigen Vorsatzgerät (2), welches mittels einer regelbaren Schwenkeinrichtung(14) mit dem Maschinenghäuse (3) derart gekoppelt ist, dass wenigstens das Vorsatzgerät (2) um eine quer zur Hauptfahrachse (7) verlaufende Drehachse (15) bewegbar ist , **dadurch gekennzeichnet dass** die Verschwenkung des Vorsatzgerätes gegenüber dem Maschinengehäuse auf zwei etwa vertikal, getrennt voneinander verlaufenden Schwenkebenen erfolgt, wobei zwischen den Schwenkebenen ein Schwenkrahmen (14a) als Koppelglied zwischen dem Schrägförderer (4) und dem Vorsatzgerät (2) angeordnet ist und der Schwenkrahmen (14a) einerseits mit dem Schrägförderer (4) und andererseits mit dem Vorsatzgerät (2) drehbewegbar verbunden ist.

3. Landwirtschaftliche Erntemaschine nach den Ansprüchen 1 und 2, **dadurch gekennzeichnet, dass** der maximal mögliche Schwenkwinkel des Vorsatzgerätes (2) gegenüber dem Schrägförderer (4) sich aus mindestens zwei, in voneinander getrennt verlaufenden Schwenkebenen vorhandenen Verstellwinkeln summiert.

4. Landwirtschaftliche Erntemaschine nach Anspruch 1, **dadurch gekennzeichnet, dass** das zusätzliche Schwenkelement bzw. die zusätzlichen Schwenkelemente als Schwenkrahmen (14 a) ausgebildet ist bzw sind, und dass jedes Schwenkelement (14 a) unabhängig vom anderen Schwenkelement bzw. von den anderen Schwenkelementen durch Stellelemente, vorzugsweise durch Kolbenzylindereinheiten verstellbar ist.

5. Landwirtschaftliche Erntemaschine nach einem oder mehreren der vorhergehenden Ansprüche 1 bis 3, **dadurch gekennzeichnet, dass** die Ansteuerung der Stellelemente (24, 25) für das Schwenkelement (14 a) über wenigstens einen die Einstellung der Laufräder (12) gegenüber dem Maschinengehäuse (3) ermittelnden Sensor, vorzugsweise durch einen hydraulischen Geberzylinder (23) auslösbar ist.

6. Landwirtschaftliche Erntemaschine nach einem oder mehreren der vorhergehenden Ansprüche 1 bis 4, **dadurch gekennzeichnet, dass** am Vorsatzgerät (2) an beiden Seiten die Bodenkontur ermittelnde Sensoren, vorzugsweise mechanisch arbeitende Sensoren (11) oder Taster angeordnet sind.

7. Landwirtschaftliche Erntemaschine nach einem oder mehreren der vorhergehenden Ansprüche 1 bis 6,
**dadurch gekennzeichnet, dass** die Einstellung des Schwenkrahmens (14a) gegenüber dem Schrägförderer (4) in Abhängigkeit von der jeweiligen Einstellung der Laufräder (12) und die Verstellung des Erntevorsatzes (2) gegenüber dem Schwenkrahmen (14a) in Abhängigkeit vom Abstand des Erntevorsatzes (2) zum Boden, erfolgt.

8. Landwirtschaftliche Erntemaschine nach einem oder mehreren der vorhergehenden Ansprüche 1 bis 7, **dadurch gekennzeichnet dass,** die hangentsprechende Einstellung der Laufräder (12) in Abhängigkeit eines Querneigungssensors (QS),
die Ansteuerung der Stellelemente (24, 25) für das Schwenkelement (14a) über wenigstens einem, die Höheneinstellung der Laufräder (12) erfassenden Sensors (23) und die Ansteuerung der mit dem Erntevorsatz verbundenen Kolbenzylindereinheiten 22 in Abhängigkeit von unterhalb des Erntevorsatzes (2) angeordneten Bodentastern (11) erfolgt.

9. Landwirtschaftliche Erntemaschine nach einem oder mehreren der vorhergehenden Ansprüche 1 bis 8, **dadurch gekennzeichnet, dass** an einem Schwenkelement (14 a) Führungsrollen (16, 17) frei drehbar gelagert sind, die sich an Führungsflächen (26) des angrenzenden Elementes (14 b) abstützen.

10. Landwirtschaftliche Erntemaschine nach Anspruch 9, **dadurch gekennzeichnet, dass** die Führungsrollen (16, 17) kulissenartig in Stegen des anderen Elementes (14 b) geführt sind.

11. Landwirtschaftliche Erntemaschine nach einem oder mehreren der vorhergehenden Ansprüche 1 bis 6, **dadurch gekennzeichnet, dass** zur Neigungsverstellung des Vorsatzgerätes (2) der regelbaren Schwenkeinrichtung (14) eine Kippeinrichtung, vorzugsweise ein Kipprahmen (14 b) zugeordnet ist, der um eine quer zur Schwenkachse (15) der Schwenkeinrichtung (14) stehende Achse (19) kippbar ist.

12. Landwirtschaftliche Erntemaschine nach einem oder mehreren der vorhergehenden Ansprüche 1 bis 10 **dadurch gekennzeichnet, dass** die Kippvorrichtung bzw. der Kipprahmen (14 b) zwischen dem Schwenkrahmen (14 a) und der Einlaufseite des Schrägförderers (14) vorgesehen ist.

13. Landwirtschaftliche Erntemaschine nach einem oder mehreren der vorhergehenden Ansprüche 1 bis 12, **dadurch gekennzeichnet, dass** die Kippachse für den Kipprahmen (14 b) im unteren Bereich des dem Schrägförderer (3) zugeordneten Maschinengehäuses liegt.

## Claims

1. An agricultural harvester comprising a machine housing (3) and a driven main travel axle (7), on the ends of which drive wheels (12) are fitted with the interposition of wheel transmissions (8) or directly pivotably, and adjusting devices which orient the machine housing (3) horizontally on uneven ground with respect to the travel plane or the wheels (12), and a front-mounted implement (2) which is coupled by means of a regulatable pivoting device (14) to the machine housing (3) in such a way that at least the front-mounted implement (2) is movable about an axis of rotation (15) extending transversely with respect to the main travel axle (7), **characterised in that** the regulatable pivoting device (14) includes a pivot frame (14a) which on the one hand is connected to the inclined conveyor (4) rotatably about a substantially horizontal axis (15) and which on the other hand has means for rotatably or pivotably connecting a front-mounted implement (2) to the pivot frame (14a), whereby the front-mounted implement (2) is also rotatable about a substantially horizontal axis (15).

2. An agricultural harvester comprising a machine housing (3) and a driven main travel axle (7), on the ends of which drive wheels (12) are fitted with the interposition of wheel transmissions (8) or directly pivotably, and adjusting devices which orient the machine housing (3) horizontally on uneven ground with respect to the travel plane or the wheels (12), and a front-mounted implement (2) which is coupled by means of a regulatable pivoting device (14) to the machine housing (3) in such a way that at least the front-mounted implement (2) is movable about an axis of rotation (15) extending transversely with respect to the main travel axle (7), **characterised in that** pivotal movement of the front-mounted implement with respect to the machine housing is effected on two pivot planes extending substantially vertically separately from each other, wherein arranged between the pivot planes is a pivot frame (14a) as a coupling member between the inclined conveyor (4) and the front-mounted implement (2) and the pivot frame (14a) is rotatably movably connected on the one hand to the inclined conveyor (4) and on the other hand to the front-mounted implement (2).

3. An agricultural harvester according to claims 1 and 2 **characterised in that** the maximum possible pivot angle of the front-mounted implement (2) with respect to the inclined conveyor (4) is formed by the sum of at least two adjustment angles present in mutually separately extending pivot planes.

4. An agricultural harvester according to claim 1 **characterised in that** the additional pivot element or elements is or are in the form of a pivot frame (14a), and that each pivot element (14a) is adjustable independently of the other pivot element or elements by adjusting elements, preferably by piston-cylinder units.

5. An agricultural harvester according to one or more of preceding claims 1 to 3 **characterised in that** actuation of the adjusting elements (24, 25) for the pivot element (14a) can be triggered by at least one sensor for ascertaining the setting of the wheels (12) with respect to the machine housing (3), preferably by a hydraulic sender cylinder (23).

6. An agricultural harvester according to one or more of preceding claims 1 to 4 **characterised in that** ground contour-detecting sensors, preferably mechanically operating sensors (11) or feeler devices are arranged on the front-mounted implement (2) at both sides.

7. An agricultural harvester according to one or more of preceding claims 1 to 6 **characterised in that** positioning of the pivot frame (14a) with respect to the inclined conveyor (4) is effected in dependence on the respective positioning of the wheels (12) and adjustment of the front-mounted implement (2) with respect to the pivot frame (14a) is effected in dependence on the distance of the front-mounted implement (2) from the ground.

8. An agricultural harvester according to one or more of preceding claims 1 to 7 **characterised in that** positioning of the wheels (12), in a manner corresponding to a slope, is effected in dependence on a transverse inclination sensor (QS), actuation of the adjusting elements (24, 25) for the pivot element (14a) is effected by way of at least one sensor (23) detecting the height adjustment of the wheels (12) and actuation of the piston-cylinder units (22) connected to the front-mounted implement is effected in dependence on ground sensors (11) arranged beneath the front-mounted implement (2).

9. An agricultural harvester according to one or more of preceding claims 1 to 8 **characterised in that** guide rollers (16, 17) are freely rotatably mounted on a pivot element (14a), the guide rollers being supported at guide surfaces (26) of the adjoining element (14b).

10. An agricultural harvester according to claim 9 **characterised in that** the guide rollers (16, 17) are guided in a sliding guide-like manner in limbs of the other element (14b).

11. An agricultural harvester according to one or more of preceding claims 1 to 6 **characterised in that** for adjustment of the inclination of the front-mounted implement (2), associated with the regulatable pivoting device (14) is a tilting device, preferably a tilt frame (14b) which is tiltable about an axis (19) disposed transversely with respect to the pivot axis (15) of the pivoting device (14).

12. An agricultural harvester according to one or more of preceding claims 1 to 10 **characterised in that** the tilting device or the tilt frame (14b) is provided between the pivot frame (14a) and the entry end of the inclined conveyor (14).

13. An agricultural harvester according to one or more of claims 1 to 12 **characterised in that** the tilt axis for the tilt frame (14b) is disposed in the lower region of the machine housing associated with the inclined conveyor (3).

## Revendications

1. Machine agricole de récolte, avec un carter de machine (3) et un essieu moteur principal (7) aux extrémités duquel sont montées des roues motrices (12) pivotantes, soit par l'intermédiaire de transmissions de roue (8), soit directement, et avec des dispositifs de réglage qui, sur terrain non plat, remettent le carter de machine (3) à l'horizontale par rapport au terrain ou aux roues (12), ainsi qu'avec un appareil antérieur porté (2) qui, au moyen d'un dispositif de pivotement réglable (14), est accouplé au carter de la machine (3) de manière à ce qu'au moins l'appareil porté (2) puisse se déplacer autour d'un axe de rotation (15) orienté perpendiculairement à l'essieu moteur principal (7), **caractérisée en ce que** le dispositif de pivotement réglable (14) comprend un cadre pivotant (14a) qui d'une part est relié de manière pivotante au convoyeur incliné (4) autour d'un axe (15) sensiblement horizontal et d'autre part comprend des moyens de liaison pivotante ou tournante d'un appareil porté (2) avec le cadre pivotant (14a), à l'aide desquels l'appareil porté (2) peut également pivoter autour d'un axe (15) sensiblement horizontal.

2. Machine agricole de récolte, avec un carter de machine (3) et un essieu moteur principal (7) aux extrémités duquel sont montées des roues motrices (12) pivotantes, soit par l'intermédiaire de transmissions de roue (8), soit directement, et avec des dispositifs de réglage qui, sur terrain non plat, remettent le carter de machine (3) à l'horizontale par rapport au terrain ou aux roues (12), ainsi qu'avec un appareil antérieur porté (2) qui, au moyen d'un dispositif de pivotement réglable (14), est accouplé au carter de la machine (3) de manière à ce qu'au moins l'appareil porté (2) puisse se déplacer autour d'un axe de rotation (15) orienté perpendiculairement à l'essieu moteur principal (7), **caractérisée en ce que** le pivotement de l'appareil porté par rapport au carter de la machine se produit dans deux plans de pivotement sensiblement verticaux et distincts l'un de l'autre, un cadre pivotant (14a) étant disposé entre les plans de pivotement pour servir d'organe d'accouplement entre le convoyeur incliné (4) et l'appareil porté (2) et le cadre pivotant (14a) étant relié de manière à pouvoir pivoter d'une part avec le convoyeur incliné (4) et d'autre part avec l'appareil porté (2).

3. Machine agricole de récolte selon les revendications 1 et 2, **caractérisée en ce que** l'angle de pivotement maximal possible de l'appareil porté (2) par rapport au convoyeur incliné (4) s'obtient par la somme d'au moins deux angles de réglage se situant dans des plans de pivotement distincts l'un de l'autre.

4. Machine agricole de récolte selon la revendication 1, **caractérisée en ce que** le ou les éléments pivotants supplémentaires prennent la forme d'un cadre pivotant (14a) et en ce chacun des éléments pivotants (14a) peut être réglé par des éléments de positionnement, de préférence des unités piston-vérin, indépendamment du ou des autres éléments pivotants.

5. Machine agricole de récolte selon une ou plusieurs des revendications précédentes 1 à 3, **caractérisée en ce que** la commande des éléments de positionnement (24, 25) de l'élément pivotant (14a) peut être déclenchée par au moins un capteur déterminant la position des roues (12) par rapport au carter de la machine (3), de préférence par un vérin hydraulique servant de capteur (23).

6. Machine agricole de récolte selon une ou plusieurs des revendications précédentes 1 à 4, **caractérisée en ce qu'**il est prévu des capteurs déterminant le contour du sol sur les deux côtés de l'appareil porté (2), de préférence des capteurs (11) ou palpeurs fonctionnant de manière mécanique.

7. Machine agricole de récolte selon une ou plusieurs des revendications précédentes 1 à 6, **caractérisée en ce que** le positionnement du cadre pivotant (14a) par rapport au convoyeur incliné (4) est commandé en fonction des différents réglages des roues (12) et **en ce que** le positionnement de l'appareil porté (2) par rapport au cadre pivotant (14a) est commandé en fonction de la distance entre l'appareil porté (2) et le sol.

8. Machine agricole de récolte selon une ou plusieurs des revendications précédentes 1 à 7, **caractérisée en ce que** la commande des roues (12) pour correspondre au dévers s'opère en fonction d'un capteur d'inclinaison transversale (QS), la commande des éléments de positionnement (24, 25) de l'élément pivotant (14a) en fonction d'au moins un capteur (23) déterminant le réglage en hauteur des roues (12) et la commande des unités piston-vérin (22) reliées à l'appareil porté en fonction des palpeurs de sol (11) montés au-dessous de l'appareil porté (2).

9. Machine agricole de récolte selon une ou plusieurs des revendications précédentes 1 à 8, **caractérisée en ce que** sont montés fous sur l'un des éléments pivotants (14a) des galets de guidage (16, 17) qui reposent sur des surfaces de guidage (26) de l'élément adjacent (14b).

10. Machine agricole de récolte selon la revendication 9, **caractérisée en ce que** les galets de guidage (16, 17) sont guidés et coulissent sur des nervures de l'autre élément (14b).

11. Machine agricole de récolte selon une ou plusieurs des revendications précédentes 1 à 6, **caractérisée en ce que**, pour le réglage en inclinaison de l'appareil porté (2), le dispositif de pivotement réglable (14) est associé à un dispositif de basculement, de préférence un cadre de basculement (14b) qui peut basculer autour d'un axe (19) disposé perpendiculairement à l'axe de pivotement (15) du dispositif de pivotement (14).

12. Machine agricole de récolte selon une ou plusieurs des revendications précédentes 1 à 10, **caractérisée en ce que** le dispositif de basculement ou cadre de basculement (14b) est monté entre le cadre de pivotement (14a) et le côté d'introduction du convoyeur incliné (4).

13. Machine agricole de récolte selon une ou plusieurs des revendications précédentes 1 à 12, **caractérisée en ce que** l'axe de basculement du cadre de basculement (14b) se situe dans la partie inférieure du carter de la machine associé au convoyeur incliné (4).
